# EUROPEAN PATENT APPLICATION

(11) **EP 4 087 003 A2**
(43) Date of publication of application: **09.11.2022**
(21) Application number: 22171280.5
(22) Date of filing: 03.05.2022
(51) Int. Cl.: H01M 10/0525, H01M 10/0583, H01M 50/103, H01M 50/54, H01M 10/0585, H01M 50/409, H01M 50/466, H01M 50/507, H01M 50/533, H01M 50/566

(54) **CELL, LITHIUM BASED BATTERY AND METHOD FOR DISSEMBLING THE BATTERY**

(30) Priority: 05.05.2021 US 202163184269 P
(71) Applicant: DarmokTech, Livermore, CA 94550 (US)
(72) Inventor: UPADHYAYA, Deepak, Fremont, 94539 (US)
(74) Representative: Fiorucci, Hélène

(57) **Abstract**

A cell of Li-ion battery comprises a plurality of anodes and cathodes of rectangular shape, each one having a current collector tab protruding from a side of the rectangular shape. Each cathode is wrapped in a separator sheet and the cathodes and anodes are stacked on each other.

A Li-ion battery comprises a stack of cells and at least four bus bar posts, each bus bar post being positioned in front of one tab in order to create an electrical connection between the tab and the bus bar post. A method for disassembling the battery comprises - holding the anode bus bar posts, and simultaneously pulling the cathode bus bar posts in the direction of the cathode tab protrusions, pulling the anode bus bar posts in the direction of the anode tab protrusions, separating the cathodes from the separators, and separating electrodes from the bus bar posts.

## Description

### CROSS-REFERENCES TO RELATED APPLICATIONS

This application claims priority to U.S. Provisional Application No. 63/184,269, filed on May 5, 2021.

### BACKGROUND OF THE INVENTION

Lithium based batteries (or Li-ion batteries) are being produced in large quantities and battery recycling is becoming important for environmental health and a sustainable future. One of the biggest challenges in Li-ion battery recycling is the disassembly and separation of cell components. Currently, most battery recycling process uses a mechanical means to crush the discharged battery creating a mixture of cell components. This mixture undergoes a high-temperature melting-and-extraction or smelting process to purify these components making battery recycling economically and environmentally unfeasible.

WO 2017/039143 A1 (LG Chem) discloses an electrode assembly of a battery, including a positive electrode plate having positive electrode tabs, a negative electrode plate having negative electrode tabs, and a separator interposed between the positive electrode plate and the negative electrode plate. In one embodiment, the positive electrode tabs and the negative electrode tabs protrude in four directions of the electrode assembly while forming a 90-degree angle.

The patent references CN 203434245 U (Kunwing University of Science & Technology), CN 209860067 U (Shantou Kairui Investment), US 6,692,866 B2 (NEC Mobile Energy Corporation) and CN 201717335 U (Xingbao Chen) disclose a battery comprising a positive and a negative tab that are orthogonal to each other.

An object of the present invention is to provide a cost-effective, flexible packaging-based recycling solution to make battery recycling economically feasible and allowing conservation of natural resources required for a sustainable future.

### BRIEF SUMMARY OF THE INVENTION

In a first embodiment, a cell of a lithium-ion battery comprises a plurality of anodes of rectangular shape, each anode having a current collector tab protruding from a side of the rectangular shape, and a plurality of cathodes of rectangular shape, each cathode having a current collector tab protruding from a side of the rectangular shape, wherein each cathode is wrapped in a separator sheet, the cathode tab being exposed outside of the separator sheet, and wherein, the cathodes and anodes are stacked on each other according to the following arrangement:
a first anode with the tab protruding in a first direction,
a first cathode with the tab protruding in a second direction orthogonal to the first direction,
a second anode with the tab protruding in a third direction opposite to the first direction, and
a second cathode with the tab protruding in a fourth direction opposite to the second direction.

This embodiment may comprise other features, alone or in combination such as:
- for each anode, the anode tab protrudes on the length side and for each cathode, the cathode tab protrudes on the width side;
- the separator is folded over the cathode and along the length of the cathode;
- the separator comprises a ceramic coating on the side touching the cathode;
- the anodes comprise a plurality of tabs protruding on the length sides of the anodes and the cathodes comprise a plurality of tabs protruding on the width sides of the cathodes; and/or
- the anode and cathode tabs are T-shaped.

In a second embodiment, a lithium-ion battery comprises at least one cell according to the first embodiment and at least four bus bar posts, each bus bar post being positioned in front of one tab in order to create an electrical connection between the tab and the bus bar post.

This embodiment may comprise other features, alone or in combination such as:
- the four bus bar posts consist in:
   - at least two anode bus bar posts positioned on two opposite sides of the battery, and
   - at least two cathode bus bar posts positioned on the two other opposite sides of the battery;
- several cells are stacked on top of each other by repeating the arrangement of cell electrodes;
- the bus bar posts have a U-shape and the tabs have a T-shape, the T-shape being inserted into the U-shape;
- tabs pass through a slot of the bus bars post and are welded to a conductive side of the bus bars post;
- the battery further comprises: a bottom plate, a top cover, which is electrically isolated from the bus bar posts, and screws for tightening the bottom plate and the top cover onto the bus bar posts;
- only the bus bar posts associated with anodes are electrically isolated from the top cover; and/or
- the bottom plate and/or the top cover comprises heat transfer elements.

In a third embodiment, a method for disassembling a battery according to the second embodiment comprises:
- holding the anode bus bar posts, and simultaneously pulling the cathode bus bar posts in the direction of the cathode tab protrusions;
- pulling the anode bus bar posts in the direction of the anode tab protrusions;
- separating the cathodes from the separators; and
- separating electrodes from the bus bar posts.

This embodiment may comprise other features, alone or in combination such as:
- the method further comprises at least one the following additional steps:
   removing the bus bar post connections from the casing;
   cutting the casing, for example laser cutting the casing; and/or
   separating the cell stack from the casing.
- the method further comprises a step of sorting electrodes, bus bar posts, separators, bottom plate, and casing, and optionally, a step of recycling the individual cell components.

The cell materials can be recovered without destroying electrode structures or material mixing, thereby enabling profitable direct recycling of each of the cell components with a low environmental profile.

### BRIEF DESCRIPTION OF THE DRAWINGS

Reference will now be made to the accompanying drawings, which are not necessarily drawn to scale, and wherein:
FIG. 1 is an isometric view of a disclosed embodiment for a Li-ion battery cell;
FIG. 2 is a schematic view of a cathode, according to a disclosed embodiment;
FIG. 3 is an isometric view of a battery according to a disclosed embodiment;
FIG. 4 shows different layouts of tabs;
FIG. 5 shows a particular embodiment of electrode tabs and bus bar post;
FIG. 6 shows another embodiment of electrode tabs and bus bar post;
FIG. 7 shows a third embodiment of electrode tabs and bus bar post;
FIG. 8 shows placement of side wall cover over the cell stack;
FIG. 9 shows electrical connection of bus bar post with an insulating layer between top cover and the bus bar post;
FIG. 10 shows an exploded view of battery packages and electrical connection scheme where negative electrodes are isolated from the cell casing and where casing is at positive electrode potential using an insulating layer between negative electrode bus bar post and top cover;
FIG. 11 is a schematic of steps of a manufacturing process from electrode patterning to battery cell testing;
FIG. 12 is a schematic showing separation of the positive electrode from stack separation and disassembling of cells for recycling;
FIG. 13 is a schematic of the steps of a disassembling process;
FIG. 14 is a schematic showing method to scale cell capacity by increasing the length of the cell and the number of negative electrode bus bar posts along the length of the cell; and
FIG. 15 is a schematic showing a spring attached to the base plate and bottom of the top plate to provide dynamic pressure on stack accommodating expansion and contraction of the stack.

### DETAILED DESCRIPTION OF THE INVENTION

The present disclosure more fully describes various embodiments with reference to the accompanying drawings. It should be understood that some, but not all embodiments are shown and described herein. Indeed, the embodiments may take many different forms, and accordingly this disclosure should not be construed as limited to the embodiments set forth herein. Rather, these embodiments are provided so that this disclosure will satisfy applicable legal requirements. Like numbers refer to like elements throughout. Also, in the following description, a same element may have different references in different figures.

In general, a secondary Li-ion battery has a structure in which a unit cell composed of a positive electrode (cathode), a negative electrode (anode), and a polymer separator interposed between the positive electrode and the negative electrode is stacked or wound and built in a case of a metal can or laminate sheets, and the electrolyte is injected therein.

A unit cell, also called electrochemical cell or battery cell, is thus the basic active unit of the battery and comprises a cathode, an anode and a polymer separator interposed between the cathode and the anode.

The present disclosure relates to a unit cell, a battery and a method for disassembling process. The unit cell and stack of cells in the battery are such as to enable an automated disassembly of the battery cell components. The cell materials can be recovered without destroying electrode structures or material mixing, thereby enabling profitable direct recycling of each of the cell components with a low environmental profile.

The present disclosure relates to a unit cell comprising a plurality of anodes of square or rectangular shape, each anode having at least one current collector tab protruding from a side of the rectangular shape, and a plurality of cathodes of square or rectangular shape, each cathode having at least one current collector tab protruding from another side of the square or rectangular shape,
wherein each cathode is wrapped in a separator sheet, the cathode tab being exposed outside of the separator sheet, and
wherein the cathodes and anodes are stacked on each other according to the following arrangement:
   a first anode with the tab protruding in a first direction,
   a first cathode with the tab protruding in a second direction orthogonal to the first direction,
   a second anode with the tab protruding in a third direction opposite to the first direction, and
   a second cathode with the tab protruding in a fourth direction opposite to the second direction.

The unit cell disclosed herein comprises four electrodes having tabs protruding in four distinct directions.

The electrodes have a square or a rectangular shape with a length to width aspect ratio equal to 1 or, preferably greater than 1. If the electrodes are rectangular, the length side is the longest side of the rectangular shape and the width side is the shortest side of the rectangular shape.

The cathodes and anodes are respectively electrically connected to the cathode bus bar posts and the anode bus bar posts via conducting members, which are hereby called tabs (e.g., thin flat conducting strips and/or the like). Tabs can be of various shapes and sizes, as explained below in more details. As described below, the size and shape of the tabs are adapted to the electrode bus bar posts, more specially to the shape and size of the bus bar posts.

The anode may have one or several tabs, for example on its length side. Similarly, the cathode may have one or several tabs, for example on its width side. The number of tabs for each electrode is not limited. Each electrode may for example have 1, 2, 3 or more tabs. The number of tabs for each electrode (anode and cathode) in a stack is usually the same; however, various embodiments are possible.

In some embodiments, the anodes comprise a plurality of tabs protruding on the length sides of the anodes and the cathodes comprise a plurality of tabs protruding on the width sides of the cathodes.

In a preferred embodiment, the anode tabs protrude (i.e., are located) on the length sides of the anodes and the cathode tabs protrude (i.e., are located) on the width sides of the cathodes.

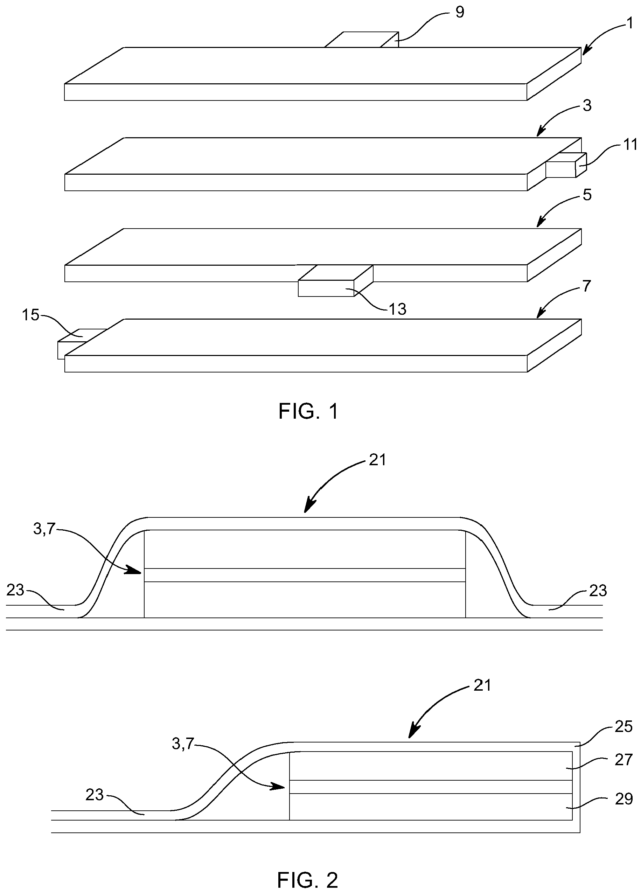

In an embodiment, a cell designed for easy recyclability is depicted in FIG. 1.

Electrodes 1, 3, 5, 7 have a rectangular shape with a length to width aspect ratio greater than or equal to 1. Each electrode 1, 3, 5, 7 has a current collector tab 9, 11, 13, 15 protruding from a side of the rectangular shape.

Electrodes 1, 3, 5, 7 comprise two anodes 1, 5 and two cathodes 3, 7 and the cathodes 3, 7 and anodes 1, 5 are stacked on each other according to the following arrangement:
- a first anode 1 with the tab 9 protruding in a first direction,
- a first cathode 3 with the tab 11 protruding in a second direction orthogonal to the first direction,
- a second anode 5 with the tab 13 protruding in a third direction opposite to the first direction, and
- a second cathode 7 with the tab 15 protruding in a fourth direction opposite to the second direction.

The tabs 9, 13 of anodes 1, 5 protrude on the length sides of the rectangle and the tabs 11, 15 of cathodes 3, 7 protrude on the width sides of the rectangle.

According to the disclosed embodiment, electrode pair consists of one anode and one cathode, wherein the cathode is wrapped in a separator sheet (which is not shown on FIG. 1), the cathode tab being exposed outside of the separator sheet. The cathode is wrapped in a separator sheet along the length, with one tab exposed on one of the width side of the cathode. The separator sheet may be sealed, for example by using heat pressure, but this is not necessarily required. To wrap the cathode, one or several separator sheets may be used.

In some preferred embodiment, only one separator sheet is used and folded over the cathode along the length of the cathode, so that the tab protrudes (i.e., is located) on the width side of the cathode.

As depicted on FIG. 2, each cathode 3, 7 is wrapped with separator 21 along the length with tab exposed. Consequently, anode is completely isolated from the cathode along the length as the edges of the cathode are covered with separator 21. In embodiment of FIG. 2A, two sheets of separator 21 are used to wrap the cathode 3, 7. In embodiment of FIG. 2B, separator is folded over the cathode 3, 7 along the length. In embodiment of FIG. 2B, separators edges 23 may be sealed on both sides along the length of the cathode while in the embodiment of FIG. 2B, only one side of separator edge 23 may be sealed, which is preferred. Other embodiments and folding of the separator over the cathode are possible, however.

Wrapping the cathode in a separator is advantageous because it avoids the high current density between the anode and the cathode, as there is typically misalignment of the electrodes when assembling and/or using the battery, notably due to the fact that the anodes and cathodes do not necessarily have the same size.

Referring to FIG. 2A and 2B, the cathode may be a sandwich of metal oxide layer 25, aluminum 27 and metal oxide layer 29. However, any other type of cathode suitable for a Li-ion battery may be used. Similarly, any type of anode suitable for a Li-ion battery may be used.

The separator (reference 21 on FIG. 2) may be made of a porous polymer, such as separators made by Celgard LLC. As an example, the separator sheet may include at least one ceramic composite layer and at least one polymeric microporous layer. For example, the separator may include at least one ceramic coating on one side of the sheet. In an embodiment, the separator sheet includes a ceramic coating on each side of the sheet. The ceramic composite layer or coating may include a mixture of inorganic particles and matrix material. In another embodiment, the separator has one ceramic coating on one side of the sheet and no ceramic coating on the other side of the sheet. The ceramic coated side is preferably the side touching the cathode. The separator ceramic coating is advantageous as it allows to protect the separator from being punched and deteriorated during the assembling process, especially considering the possibly protruded metallic elements of the cathode material. The separator ceramic coating is also advantageous as it allows an easy sliding of the cathode, especially during the dissembling process.

The separator seal 23 may be done using a press, for example a heat press, which melts the polymer (e.g., polymer of the polymeric microporous layer) used in the separator until it melts. And heat sealing is possible with single sided ceramic coated separator. Single side coating of separator allows heat sealing of edges as one side has only polymer. The sealing step is carried out at a temperature equal to or above the melting temperature (Tm) of the polymer used in the separator sheet.

The present disclosure also relates to a Li-ion battery comprising at least one-unit cell as described herein and four bus bar posts, each bus bar post being positioned in front of one tab in order to create an electrical connection between the tab and the bus bar post. The anode bus bar post is always electrically isolated from the casing and the cathode bus bar post, depending upon the battery application, may be electrically isolated from the casing.

In some embodiments, the battery is such that it comprises:
- at least one cell as described herein,
- at least two anode bus bar posts positioned on two opposite sides of the battery, and
- at least two cathode bus bar posts positioned on two opposite sides of the battery.

Therefore, in the disclosed embodiment, during the assembling process, the anodes are placed such that their tabs are placed at opposite locations e.g., if the first anode tab (1^{st} anode tab - odd) is on one side along the length of the electrode, the second anode tab (2^{nd} anode tab - even) is then on the opposite side along the length of the electrode. Similarly, for the cathodes, tabs are placed at opposite locations along the width e.g., if the first cathode tab (1^{st} cathode tab - odd) is on one side along the width of the electrode, the tab second cathode tab (2^{nd} cathode tab - even) is on the opposite side along the width of the electrode. Thus, all odd-numbered anode tabs are located on one side while all even-numbered anode tab are located on the opposite side. Similarly, all odd-numbered cathode tabs are located on one side while all even-numbered cathode tabs are located on the opposite side.

The unit cell of the present disclosure therefore comprises two electrode pairs:
a first electrode pair comprising:
   - a first anode with the tab(s) protruding in a first direction,
   - a first cathode with the tab(s) protruding in a second direction orthogonal to the first direction,
a second electrode pair comprising:
   - a second anode with the tab(s) protruding in a third direction opposite to the first direction, and
   - a second cathode with the tab(s) protruding in a fourth direction opposite to the second direction,
wherein each cathode is wrapped in a separator sheet, the cathode tab being exposed outside of the separator sheet.

In some preferred embodiments, the electrodes have tabs protruding in one direction only. For example, in some embodiments, the electrode have one tab only per electrode, and each of the four electrodes tab in the unit cell disclosed herein protrudes in a distinct direction from the three other tabs of the unit cell. If the electrodes are rectangular, the tabs of the cathodes are preferably located on the length sides, while the tabs of the anodes are preferably located on the width sides.

Referring to FIG. 1, a first electrode pair (also called hereby odd electrode pair) is created by stacking anode 1 and cathode 3 where positive electrode is wrapped in a separator along the length (not shown). A second electrode pair (also called hereby even electrode pair) is created by stacking anode 5 and cathode 7 where the cathode is wrapped in the separator (not shown). The four electrodes depicted in FIG.1 are designed to be connected to a different bus bar post, with the goal of facilitating the disassembling and recycling of the battery after use.

In the present disclosure, the stacking of electrodes pair in the assembling process is performed in two steps: anode placement followed by cathode placement (cathode being wrapped in a separator sheet). This stacking scheme differs from the traditional stacking of electrodes, consisting in three steps, i.e., stacking of the anode, the separator and the cathode in sequence. Further, the traditional electrode stacking process can result in lithium plating due to higher current density at the electrode edges arising from the misalignment of the stacked electrodes. The disclosed embodiment overcomes such limitation of traditional stacking and make cells safer by preventing lithium plating issues, even with misaligned electrode placement, as the positive electrode is wrapped in the separator covering the edges of the positive electrode. In a not preferred embodiment, separator can be placed using traditional stacking method or can be wrapped without sealing when separator has ceramic coating on both sides.

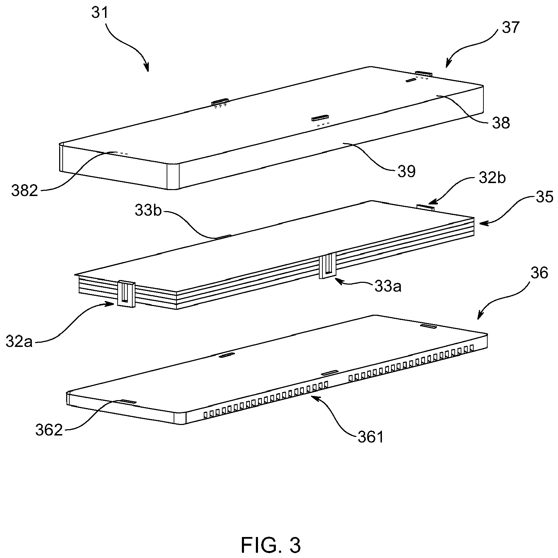

Referring to FIG. 3, a battery 31 comprises at least one cell arrangement 33 as disclosed herein and, more generally, a plurality of cells stacked on top of each other and repeating the pattern of alternate odd and even electrode pairs.

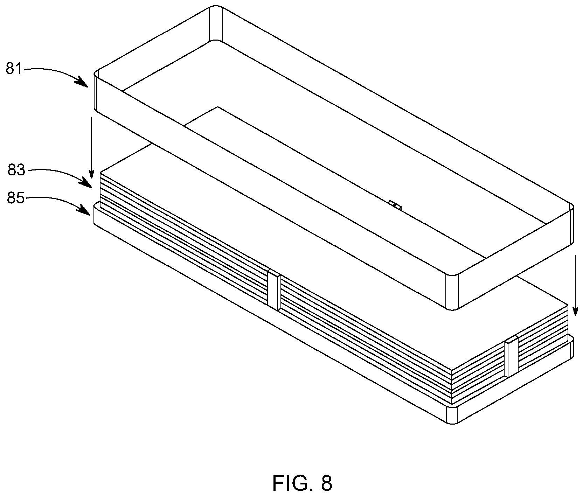

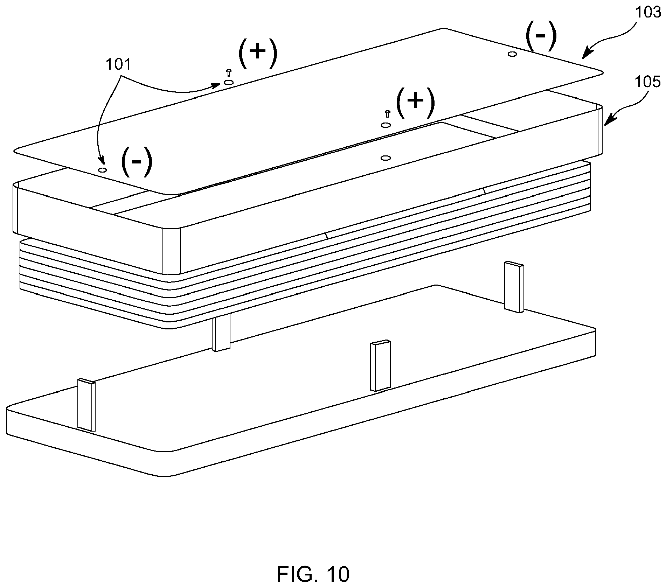

Battery 31 includes a casing (or a housing) 37 for closing the battery, comprising a top cover 38 and side walls 39, a bottom plate (or base plate) 36, and a stack of cells 35. Alternatively, the casing 37 can be in two separate parts: one top cover 38 and one ring for the side walls, as notably depicted in FIG. 8 and FIG. 10.

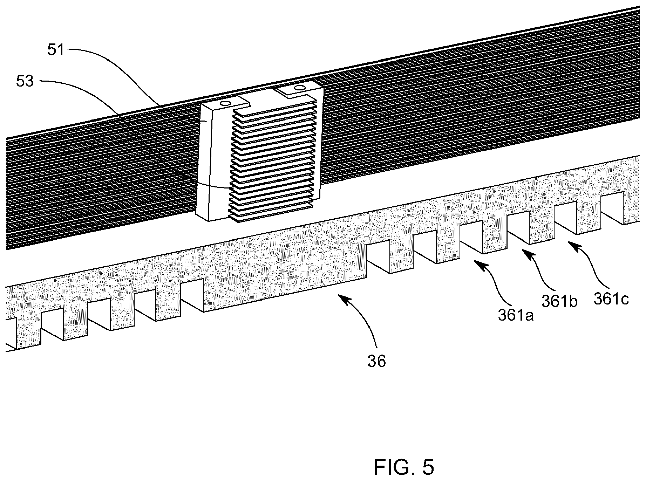

The bottom plate 36 preferably include heat transfer elements 361, for example ribs, for increasing the air flow. They increase the surface area of the bottom plate 36 and allow a better cooling of the battery when in use. The heat transfer elements 361 are preferably part of the bottom plate (integrated in the bottom plate) as depicted in FIG. 5, as this facilitates the disassembling and recycling process. FIG.5 shows three ribs 361a, 361b, 361c in the bottom plate 36. The top cover 38 (should it be in the form of a casing or as separate element of the assembly) may also include heat transfer elements (not shown).

The bottom plate 36 also preferably include slots (or cavities) 362 which are the same size and shape as the bus bar posts, in order to maintain the bus bar posts in place when the battery is assembled. Other methods to attach bus bar to casing are also possible. The top cover 38 (should it be in the form of a casing or as separate element of the assembly) may also include slots or cavities or holes 382 which are the same size and shape as the bus bar posts, in order to maintain the bus bar posts in place when the battery is assembled.

The casing and the bottom plate are for example made of electrically and thermally conductive metals such as steel or aluminum.

Odd and even electrode pairs are stacked to create a cell stack. Odd and even anodes within electrode pairs are respectively electrically connected to the same bus bar post. For example, the 1st, 3rd, 5th ...nth anodes (i.e., odd anodes) within each electrode pairs are connected to the same bus bar post on the length side, while the 2nd, 4th, 6th ... nth anodes (even anodes) are connected to the bus bar post located on the opposite length side of the cell stack. In a similar way, odd and even cathodes within electrode pairs are respectively electrically connected to the same bus bar post. 1st, 3rd, 5th... nth cathodes (i.e., odd cathodes) within electrode pairs are connected to one bus bar post in the width side of the cell stack, while 2nd, 4th, 6th ... nth cathodes (even cathodes) are connected to the bus bar post on the opposite width side. Alternate electrode tab location eases separation of cell components during the dissembling process, while providing high safety and capacity scalability as discussed thereafter.

The electrode tabs are preferably attached to the bus bar post by welding, for example ultrasonic welding, laser welding, resistance welding, or the like.

Two bus bar posts 33 (33a, 33b) for the anodes and two bus bar posts 32 (32a, 32b) for the cathodes are depicted on FIG. 3.

According to the disclosed embodiments, tabs and bus bar posts can be of various size and shape. Several layouts of the tabs and the bus bar posts, as well as connections between the two, are now disclosed.

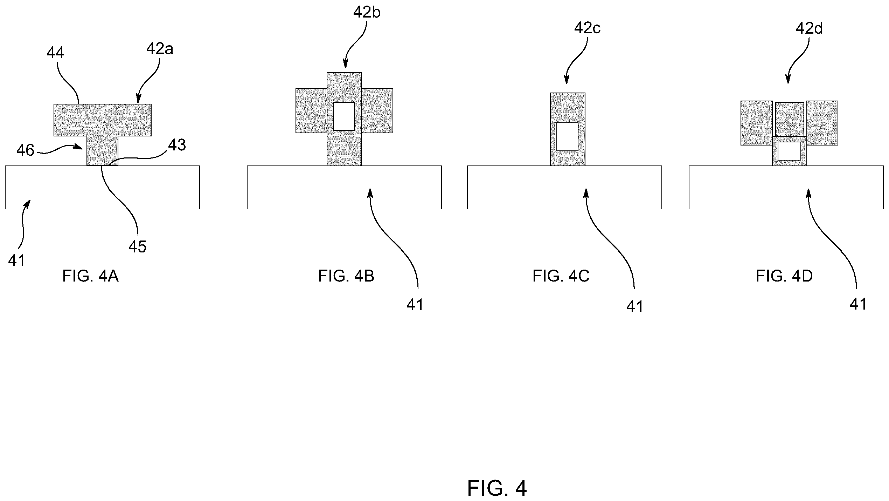

FIG. 4 shows four distinct tab designs 42a, 42b, 42c, 42d, some of them with slots (or cavities) in which the bus bar post may be inserted. The sides of the tab may be folded over the bus bar post and welded to the bus bar post. The various dimensions of the tab elements (i.e., ends, base, legs, etc.) are adjusted to match the bus bar post dimensions.

In a preferred embodiment, which is depicted in FIG. 4A, the anode and cathode tabs are T-shaped. Tab 42a includes a proximal end 43, located near base 45, and a distal end 44 that extends away from base 45. T-shaped tab 42a, depicted in FIG. 4A, includes one leg 46. However, electrode tabs of the present disclosure may comprise several legs 46. According to this tab design, the bus bar post is for example U-shaped. However, bus bar post may be of multiple shapes and sizes to accommodate various tabs designs.

In the embodiment of FIG. 4B, the tab 47 has a substantially rectangular shape with a wing on each side and a hole in which the bus bar post may be inserted. After insertion of the bus bar post, the wings are folded around it and welded on it.

The embodiment of FIG. 4C is substantially similar to the embodiment of Figure 4B, except that the tab has no wing.

The embodiment of FIG. 4D comprises a tab with 2 wings forming a U-shape in which the bus bar post is positioned. The tab wings are then bended onto the bus bar post and welded on it.

In one preferred embodiment associated with FIG. 4A, the bus bar posts have a U-shape and the tabs have a T-shape, the T-shape being inserted into the U-shape.

In the embodiment of FIG. 5, the bus bar post 51 has a U-shape and the tabs 53 have a T-shape. So, when the cells are stacked, the bus bar post 51 may guide and maintain the electrodes in place. FIG.3 also depicts bus bar posts which are U-shaped, more precisely two bus bar posts 33 (33a, 33b) for the anodes and two bus bar posts 32 (32a, 32b) for the cathodes.

Bus bar posts may be in one-piece or in several pieces. For example, the bus bar post may be a one-U-shape piece, or alternatively it can consist in two bars which are positioned side-by-side in the battery assembly, for example screwed on the bottom plate close enough so that the tabs can be welded on them.

During the assembling process, the distal ends of the tabs (i.e., the tab parts situated farthest from point of attachment to the electrodes) may be bent and welded onto the bus bar posts. Preferably, the size of the tabs is such that the welded tabs overlap on each other when welded on the bus bar posts. This is advantageous as the overlaps increase the strength of the battery assembly.

For example, in one embodiment wherein the anode thickness is about 200 microns, the wrapped cathode thickness is about 155 microns, the electrode tabs are at least about 500 microns long from the base to distal extremity. In some embodiments, the electrode tabs are at least about 600 microns long from the base to distal extremity, at least 700 microns, at least 800 microns, at least 900 microns, and even at least 1,000 microns long (or 1 mm). Referring to FIG. 4A, the tab 42a may for example be at least 500 microns long from the base 45 to the distal end 44, with the part 47 of the tab being bent so that at least part of the tab 47 come in contact with the bus bar post to be welded onto it.

The bus bar posts in the battery assembly of the present disclosure may preferably be the same. Distinct bus bar post designs may alternatively be used in the assembly of the present disclosure.

The electrode tabs in the battery assembly of the present disclosure may be the same for all electrodes. Alternatively, the electrodes of the present disclosure may present tabs of distinct designs, as long as all the electrodes connected to the same bus bar post present the same design.

In some embodiments, the tabs are positioned in the bus bars post and are welded to a side of their respective bus bars posts (not shown in FIG. 5).

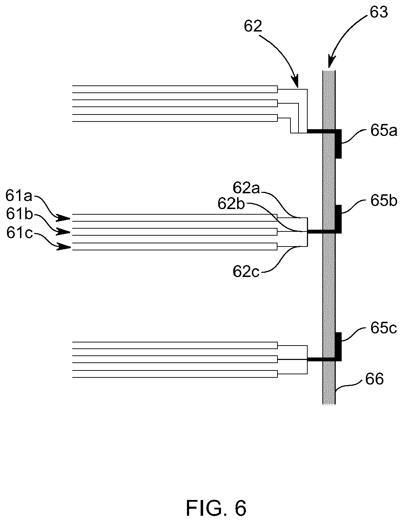

In the embodiment of FIG. 6, several electrode tabs 62 (62a, 62b, 62c) from the corresponding electrodes 61 (61a, 61b, 61c) are gathered and passed through a slot in the bus bar post 63. The assembled tabs 61 are folded over bus bar post in any direction and welded to the external side 66 of the bus bar post 65 (65a, 65b, 65c). In this scheme, tab length and width are related to the cell size and appropriately designed.

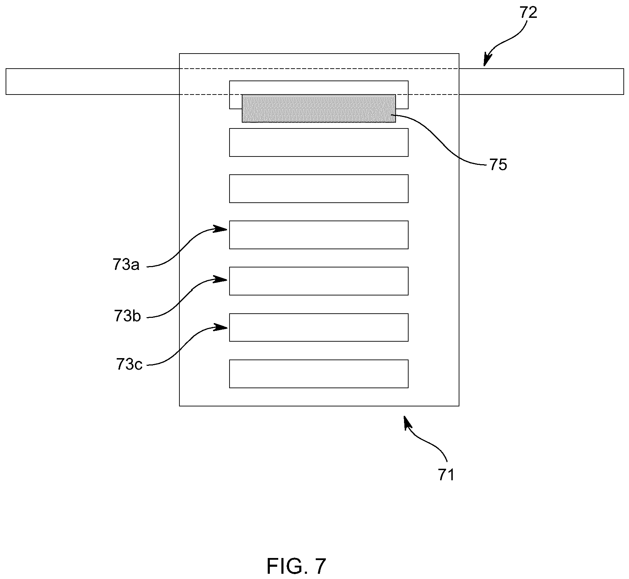

In the embodiment of FIG. 7, tabs of appropriate length pass through the corresponding slot 73 in the bus bar post. Electrode bus bar post 71 has multiple slots 73 (73a, 73b, 73c) as per the number of electrodes 72. To connect the electrode to the bus bar post, electrode tab 75 is inserted through bus bar post slot, folded over, and welded to the bus bar post. The folding of the tabs on the back side of the bus bar can be realized in any directions: downwards, upwards or one the sides, depending on the shape and size of the tabs. As described before even and odd electrodes are connected to the appropriate bus bar post. The number of slots and number of electrodes is not necessary the same, as several tabs may be gathered and passed through one slot, as depicted in FIG. 6.

FIG. 8 shows placement of side wall cover 81 over stack 83. Here, bottom plate (or base plate) 85, side wall (or ring) 81 and top cover (not represented) are made of aluminum, steel or plastic. After placing the side wall cover 81 over the stack 83, bottom of the side wall is welded to the base plate 85 along the edges. The cell stack 83 is not in direct physical contact with the casing side wall 81 and separated by the thickness of the electrode bus bar posts.

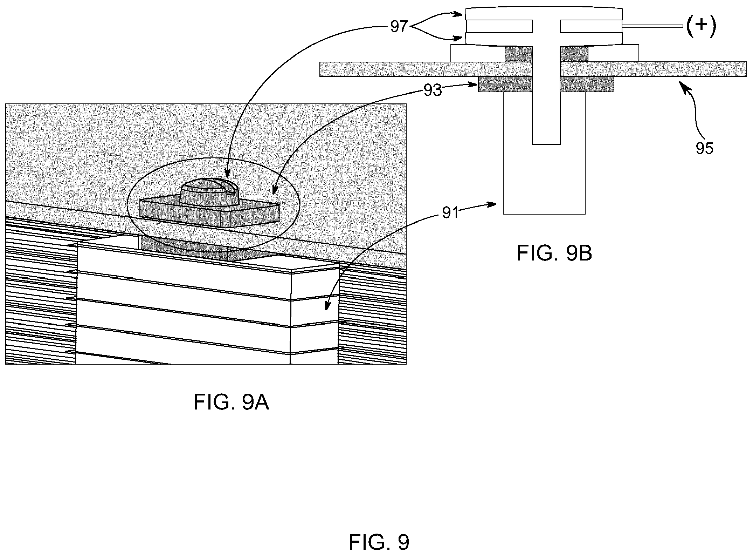

An electrical connection design where the top of the electrode bus bar post 91 has internal threads or similar connecting embodiment is depicted in FIG. 9. In one embodiment, an insulating layer 93 is placed over each electrode bus bar post 91, followed by placing of top cover 95. A screw 97 is used to tighten the bus bar post 91 to top cover 95 where an insulating layer 93 is placed between the screw head and top cover. Stresses originating from the tightening are accommodated with the flexibility of the electrode tabs and robustness of welded tabs to the bus bar post. Cell to cell connection, within a battery pack, is achieved by connecting screws at the top of the bus bar post. This eliminates costly load wire connection with bus bar for the negative electrode and positive electrode as depicted in FIG. 9B. The disclosed embodiments include removal of welding of load wire connection to bus bar post and where cell to cell within a battery pack is similar to the lead-acid battery and multi-point electrical connection based on battery size.

FIG. 10 shows an exploded view of a battery with electrical connection 101 scheme where anodes are isolated from the cell casing and where casing is at cathode potential using an insulating layer between negative electrode bus bar post and top cover 103 as depicted in FIG. 9B. Top cover 103 is welded to the side wall 105 creating a hermetically sealed structure.

In another embodiment, both odd and even positive electrodes are isolated from the casing using a method similar to the one used for negative electrode isolation from the casing. This embodiment provides flexibility in electrical connection.

One aspect of the present disclosure is a method for assembling the battery described herein. The assembling method of the present disclosure is preferably designed to be automated. The method comprises wrapping a cathode into a separator, placing an anode on a bottom plate (or base plate) or in a casing, and stacking the wrapped cathode onto the anode. These steps are repeated as needed, depending on the number of unit cells or electrode pairs in the battery.

Because the cathodes tabs are located on the width sides of the cathodes, the wrapping of the cathode in the separator sheet, for example according to FIG. 2A, is performed on the small dimensions of the rectangular cathodes. This embodiment according to which separator is folded around the cathode and sealed once on the width side is preferred, because such embodiment uses less separator material than other embodiments in which for example several separator sheets are used, and several sealing steps are needed.

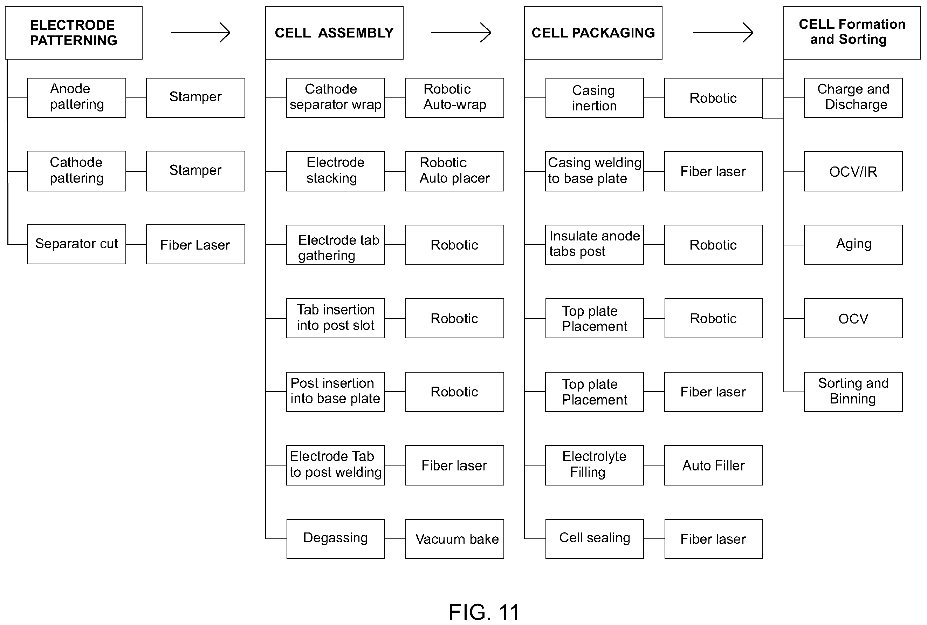

FIG. 11 shows one example of a step-by-step process for in-line automated manufacturing of a battery and packaging structure along with the corresponding equipment needed to fabricate such battery. Commercially available electrodes are patterned, and separators are cut as per cell design. Separator is folded over the positive electrode in length direction keeping tabs open. In one embodiment, complete isolation of the negative electrode from the positive electrode is envisioned as all four edges of separators are heat sealed along the four edges of the positive electrode. In another embodiment, separator edges are sealed only in the length direction. After folding, electrodes are stacked in an alternate formation onto the base plate as described earlier. In an embodiment as described in FIG. 10 and FIG. 6, tabs are gathered at the end, pass thru a slot in bus bar post, folded and laser welded to the backside of bus bar post tabs. Other embodiments include slotted bus bar posts and multiple design of tabs as described earlier in FIG. 4 to 7. After stacking and physically connecting the tabs to the bus bar post, the side wall of the cell is lowered over the stack encompassing cell stack and bus bar posts. Four bottom edges of the side wall bottom are welded to the based plate creating hermetically sealed edge. In one embodiment as shown in FIG. 9, an insulating layer is placed over the negative electrode bus bar post, and top cover is placed over the assembly, followed by applying pressure over stacks by pressing top cover and welding the top plate to the top edge or side wall, FIG. 9A. An insulating layer is placed on top of a bus bar post and an appropriate screw is threaded into the bus bar post creating a hermetically sealed structure. As depicted in FIG. 8, there exists a gap between inner surface of the side wall and stack equivalent to the thickness of bus bar post as a side wall sits behind the bus bar post.

Electrode tab design, stacking method and packaging described above allow simplified separation of electrodes from the cell structure at the end-of-cell life, without mixing of electrode material. An aspect of the present disclosure is directed to a method for disassembling a battery as described above. This method comprises the following four steps:
- holding the anode bus bar posts, and simultaneously pulling the cathode bus bar posts in the direction of the cathode tab protrusions, in order to separate the separator-wrapped cathodes from the anodes;
- pulling the anode bus bar posts in the direction of the anode tab protrusions;
- separating the cathodes from the separators; and
- separating electrodes from the bus bar posts.

The disassembling method of the present invention is preferably designed to be automated. Force to slide electrodes can be reduced by reducing friction between layers with the application of vibration and/or use of appropriate liquid.

In the method for disassembling the battery described herein, the tabs are attached to the bus bar posts when the anode bus bar posts are hold and the cathode bus bar posts are simultaneously pulled in the direction of the cathode tab protrusions.

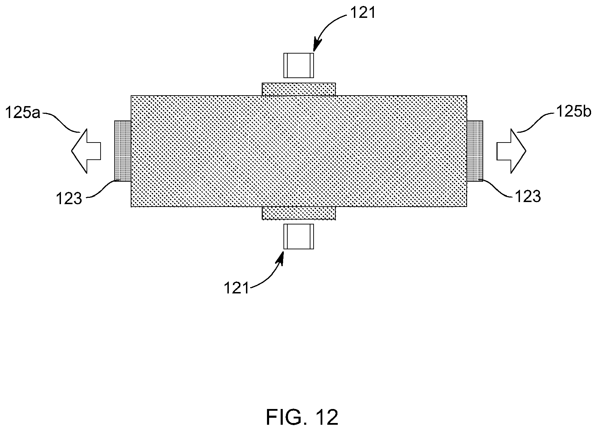

A step-by-step process to separate the positive electrode, negative electrode and cell component is depicted in FIG. 12, wherein the anode bus bar posts 121 are hold in place, while the cathode bus bar posts 123 are pulled in the direction of the cathode tab protrusions (external directions). As shown on FIG. 12, the cathode bus bar posts are pulled in opposite direction (125a, 125b) with respect to each other, due to the special arrangement of the cells described herein. The cathode bus bar posts may be pulled in one external direction first (125a or 125b), and then in the other external direction (respectively 125b or 125a). Alternatively, the cathode bus bar posts are pulled in opposite external direction (125a, 125b) simultaneously.

At the end of the first step of the disassembling process:
- the cathodes attached to their respective cathode bus bar posts are separated from the anodes which are still attached to their respective anode bus bar posts, and
- the so-called odd cathodes attached to their so-called odd cathode bus bar posts are separated from the so-called even cathodes attached to their so-called even cathode bus bar posts.

The odd and even anode attached to their respective bus bar posts are then separated from each other by pulling the posts in opposite direction.

At the end of the second step of the disassembling process:
- the odd cathode, even cathode, off anode and even anodes are all separated form each other, and
- all the electrodes are still attached to their respective bus bar posts

The third and four steps of the disassembling process may be carried out in any order: separating the cathodes from the separators and then separating electrodes from the bus bar posts, or the other way around.

Also, the step of separating the electrodes from the bus bar posts may be carried out between the first and the second steps of the disassembling process.

In some embodiments, the method for disassembling a battery comprises at least one the following additional steps:
- removing the bus bar post connections from the casing;
- cutting the casing, for example laser cutting the casing; and/or
- separating the cell stack from the casing.

In some preferred embodiments, the method for disassembling a battery according to the present disclosure comprises a step consisting in sorting electrodes, bus bar posts, separators, bottom plate, and casing. Optionally, such preferred method also comprises the recycling of the individual cell components.

In one embodiment, the method for disassembling a battery as described above comprises the following steps in the following order:
- removing the electrical connections from the top cover;
- cutting the casing, for example laser cutting the casing;
- removing the casing and removing the stack from the bottom plate;
- applying vibration to stack to loosen the layer;
- applying slight pull while holding the anode bus bar posts;
- pulling the cathodes in the direction of the anode tab protrusions, either simultaneously in each direction or in two times in one direction first and then in the opposite direction based on the tab protrusion;
- separating the anodes on each side by holding the bus bar posts;
- separating the bus bar posts from the electrodes, for example by cutting the proximal ends of the tabs, near the tab bases on the electrodes; and
- separating the cathodes from the separator sheets, for example by cutting the separator if sealed.

The cell components including electrodes, separator, casing, bottom plate, bus bar posts, can then be individually recycled.

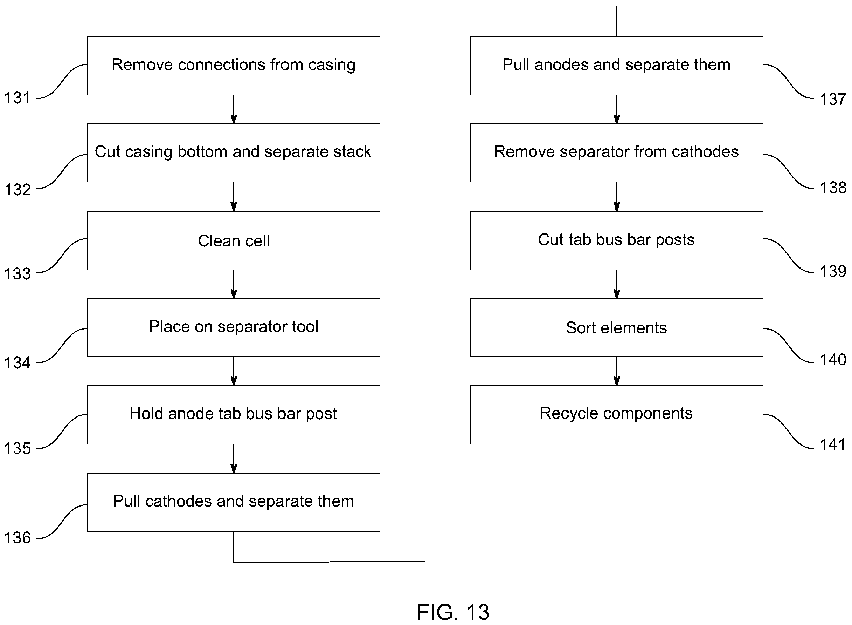

In one specific embodiment of the present disclosure which is described in FIG. 13, the step-by-step process to disassemble the battery is as follows:
- removing bus bar post connection from the casing, step 131;
- laser cutting bottom of casing and separate from the stack, step 132;
- optionally, cleaning cells in solvent (DMC), step 133;
- placing cells on the separator tool, step 134;
- pulling and holding anode tab bus bar posts 121 in place, step 135;
- pulling cathode tab bus bar posts 123 in opposite external directions and separating cathode layers from bus bar posts, step 136;
- pulling anode bus bar post 121 in opposite external directions and separating anode layers from bus bar posts, step 137;
- removing separators from cathodes, step 138;
- cutting bus bar posts, step 139;
- sorting electrodes, separators, bottom plate, casing, bus bar posts, plastic insulation, etc., step 140; and
- recycling individual cell components, step 141.

Application of the process described above result is an easy and safe disassembly of electrodes and packaging material and separation of individual cell components without mixing.

Embodiments where tabs are placed at opposite location enable electrical isolation of odd-numbered negative electrodes from even-numbered negative electrode within the cell stack. For example, within the stack, negative electrode #1 is not electrically connected with the negative electrode #2. This makes cell design safer as any short in one electrode pair will not propagate through the stack. Embodiments teach multiple electrical connection schemes. For example, in one embodiment where negative and positive electrode bus bar posts are electrically isolated from the casing, odd number negative electrodes within the stack can be paired to odd number positive electrodes while even numbered negative electrodes within the stack is paired to even numbered positive electrodes. In another example, odd and even positive electrode can be connected to the casing at positive electrode potential and odd and even negative electrodes are separately connected to the casing. The disclosed embodiments provide electrical connection flexibility not available in traditional cell designs while providing high safety.

The disclosed embodiments present several advantages. One additional benefit of the cell and battery assembly describe herein is with respect to the heat transfer. Typically, heat transfer can take place during operation of the battery at the bottom plate and around the bus bar posts. The specific arrangement of the present disclosure provides an effective management of the heat transfer between the cells within a battery pack. As shown in FIG. 10, the cell stack is not in direct physical contact with the casing side wall and separated by the thickness of the electrode bus bar posts. Thus, during cell operation, heat transfer between cell stack and casing is via convection through vacuum and/or cell generated gas and not via conduction, thereby reducing heat transfer overall from the cell stack to casing. As the casing is not heated from the cell stack during operation, a reduction in heat transfer is achieved when cells are placed in direct contact within a battery pack enabling the disclosed embodiments to improve cell and battery pack safety. Advantageously, the cells are placed on a bottom plate comprising heat transfer elements such as ribs, further achieving cell-to-cell heat reduction.

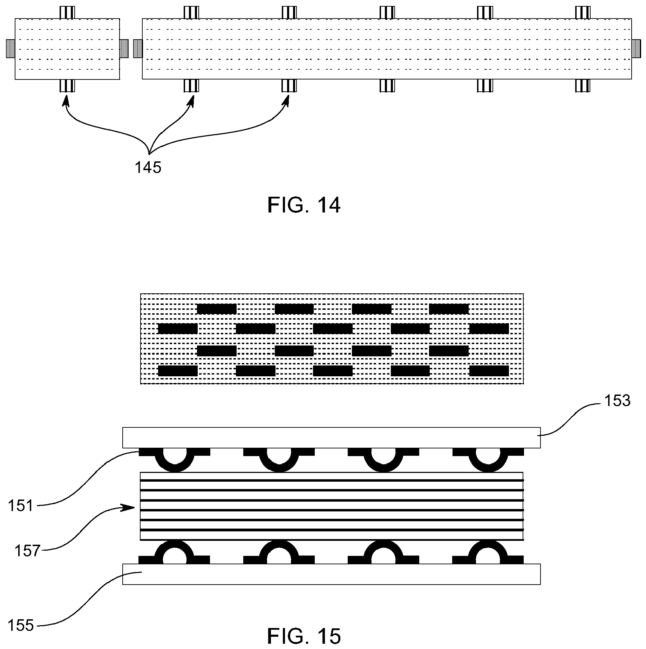

In a particular embodiment, a unique way to scale cell capacity ranging from 10 Wh to 1000 Wh by increasing either the number of electrodes or by increasing the length of the cell or both is shown in FIG. 14. As capacity of the cell is increased, the number of anode bus bar posts 145 can also be increased as per requirement of current flow through the bus bar posts. No change in manufacturing equipment is expected. Another embodiment is to increase the dimension referable length and/or thickness of the electrode bus bar post to accommodate increased current flow with an increase in cell capacity. Embodiments allow variety of electrical connection scheme such as odd and even number negative electrode within stack is separately connected to cell casings at positive electrode potential. In one embodiment, the odd numbered negative electrode connected to casing are discharged while even numbered negative electrodes are electrically isolated from the casing suing a switch. This improves improving cell safety as it enables utilization of 50% cell capacity at a time to reduce heat generation as electrodes are further spaced compared to the traditional stack.

Many new negative electrode chemistries such as silicon or lithium and/or solid-state battery all require the application of stack pressure to cycle efficiently. For example, during lithiation at the first charge cycle, silicon-based negative electrode expands considerable exerting about 300 kPa to 2800 kPa peak stack pressure on packaging. This peak pressure decreases gradually with subsequent cycling and stack in thickness direction contract. This expansion and contraction of silicon can result in electrodes and/or current collector damage. The disclosed embodiment depicted as FIG. 15 overcomes expansion and contraction-related stresses by providing dynamic pressure on the stack using the springs 151 attached to the top cover plate 153 and/or to the bottom base plate 155. Since stack 157 is not physically connected to the sides of the casing making stack floating, dynamic application of pressure over the stack is possible to enable accommodation of stack stresses with expansion and contraction of springs. Embodiment of this approach and application of dynamic pressure can be applied to any battery system that requires dynamic pressure of the stack to cycle effectively including but not limited to solid-state battery having a solid-state electrolyte or lithium negative electrode batteries. Embodiments include application of different spring constant for different cell size and negative electrode chemistry to accommodate varying peak stack pressure.

## Claims

1. A cell of a lithium-ion battery comprising a plurality of anodes of rectangular shape, each anode having a current collector tab protruding from a side of the rectangular shape, and a plurality of cathodes of rectangular shape, each cathode having a current collector tab protruding from a side of the rectangular shape,
wherein each cathode is wrapped in a separator sheet, the cathode tab being exposed outside of the separator sheet, and
wherein, the cathodes and anodes are stacked on each other according to the following arrangement:
a first anode with the tab protruding in a first direction,
a first cathode with the tab protruding in a second direction orthogonal to the first direction,
a second anode with the tab protruding in a third direction opposite to the first direction, and
a second cathode with the tab protruding in a fourth direction opposite to the second direction.

2. The cell according to claim 1, wherein, for each anode, the anode tab protrudes on the length side and, for each cathode, the cathode tab protrudes on the width side.

3. The cell according to any one of the preceding claims, wherein the separator is folded over the cathode and along the length of the cathode.

4. The cell according to any one of the preceding claims, wherein the separator comprises a ceramic coating on the side touching the cathode.

5. The cell according to any one of the preceding claims, wherein the anodes comprise a plurality of tabs protruding on the length sides of the anodes and the cathodes comprise a plurality of tabs protruding on the width sides of the cathodes.

6. The cell according to any one of the preceding claims, wherein the anode and cathode tabs are T-shaped.

7. A lithium-ion battery comprising at least one cell according to according to any one of the claims 1-6 and at least four bus bar posts, each bus bar post being positioned in front of one tab in order to create an electrical connection between the tab and the bus bar post.

8. The battery according to claim 7, in which the four bus bar posts consist in:
- at least two anode bus bar posts positioned on two opposite sides of the battery, and
- at least two cathode bus bar posts positioned on the two other opposite sides of the battery.

9. The battery according to claim 7 or 8, wherein several cells are stacked on top of each other by repeating the arrangement of cell electrodes.

10. The battery according to any one of claims 7-9, wherein the bus bar posts have a U-shape and the tabs have a T-shape, the T-shape being inserted into the U-shape.

11. The battery according to any one of claims 7-10, wherein tabs pass through a slot of the bus bars post and are welded to a conductive side of the bus bars post.

12. The battery according to any one of claims 7-11, further comprising: a bottom plate, a top cover, which is electrically isolated from the bus bar posts, and screws for tightening the bottom plate and the top cover onto the bus bar posts.

13. A method for disassembling a battery according to any one of claims 7-12 comprising:
- holding the anode bus bar posts, and simultaneously pulling the cathode bus bar posts in the direction of the cathode tab protrusions;
- pulling the anode bus bar posts in the direction of the anode tab protrusions;
- separating the cathodes from the separators; and
- separating electrodes from the bus bar posts.

14. The method according to claim 13, further comprising at least one the following additional steps:
- removing the bus bar post connections from the casing;
- cutting the casing, for example laser cutting the casing; and/or
- separating the cell stack from the casing.

15. The method according to claim 13 or 14, further comprising a step of sorting electrodes, bus bar posts, separators, bottom plate, and casing, and optionally, a step of recycling the individual cell components.
